Europäisches Patentamt

European Patent Office

Office européen des brevets

(11) Numéro de publication : **0 328 461 B1**

(12) # FASCICULE DE BREVET EUROPEEN

(45) Date de publication du fascicule du brevet :
09.06.93 Bulletin 93/23

(51) Int. Cl.⁵ : **H04N 7/00, H04N 17/02**

(21) Numéro de dépôt : **89400397.9**

(22) Date de dépôt : **13.02.89**

(54) **Procédé de diffusion de programme de télévision à haute définition et récepteur à égaliseur destiné à recevoir un tel programme.**

(30) Priorité : **11.02.88 FR 8801641**

(43) Date de publication de la demande :
**16.08.89 Bulletin 89/33**

(45) Mention de la délivrance du brevet :
**09.06.93 Bulletin 93/23**

(84) Etats contractants désignés :
**DE GB NL**

(56) Documents cités :
**EP-A- 0 029 780
EP-A- 0 212 839
EP-A- 0 253 623
US-A- 4 047 013
PHILIPS TECHNICAL REVIEW, vol. 43, no. 8, août 1987, pages 197-212, Eindhoven, NL; M.J.J.C. ANNEGARN et al.: "HD-MAC: a step forward in the evolution of television technology"**

(73) Titulaire : **FRANCE TELECOM
6, Place d'Alleray
F-75015 Paris (FR)**
Titulaire : **TELEDIFFUSION DE FRANCE
10, rue d'Oradour sur Glane
F-75015 Paris (FR)**

(72) Inventeur : **Veillard, Jacques
La Vizeule Montgermont
F-35760 Saint Grégoire (FR)**
Inventeur : **Halbert-Lassale, Roseline
3A, Place du 50ème d'Artillerie
F-35000 Rennes (FR)**
Inventeur : **Palicot, Jacques
15, rue Robelin
F-35000 Rennes (FR)**
Inventeur : **Pommier, Daniel
Le Chant des Alouettes
F-35310 Bréal Sous Montfort (FR)**

(74) Mandataire : **Fort, Jacques
CABINET PLASSERAUD 84, rue d'Amsterdam
F-75009 Paris (FR)**

## Description

L'invention concerne la réception des programmes de télévision à haute définition, prévue au format 16/9, diffusés sous forme d'un multiplex temporel de signaux analogiques d'image (HD-MAC) et de signaux numériques de son et de données. La compatibilité des récepteurs HD-MAC avec les récepteurs recevant des signaux de type connu sous la dénomination générale X-MAC doit être assurée, c'est-à-dire que ces récepteurs doivent pouvoir restituer une image conventionnelle à partir d'une image à haute définition.

Une image de télévision à haute définition ne peut être restituée correctement qu'à partir d'un multiplex de signaux d'image (signaux de luminance et signaux de chrominance) dont les échantillons successifs restent indépendants à l'entrée du décodeur du récepteur, comme ils l'étaient à la sortie du codeur d'émission. Dans le cas du multiplex MAC à haute définition, fréquemment désigné par l'appellation HD-MAC qui sera utilisée par la suite, la fréquence d'échantillonnage prévue est de 20,25 MHz. Pour que la condition d'indépendance soit remplie, il faudrait que le filtre passe-bas équivalent au canal de transmission vérifie le premier critère de Nyquist à 10,125 MHz. Cette contrainte n'est que partiellement satisfaite par la plupart des supports de diffusion par satellite actuels.

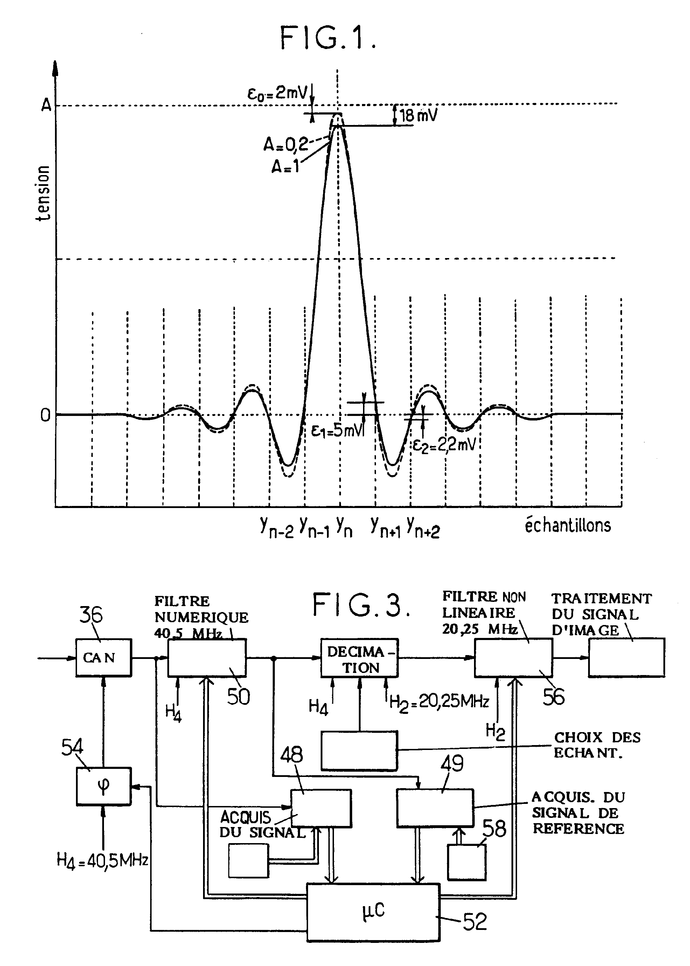

Le problème est encore compliqué du fait que les supports de transmission présentent des caractéristiques très diverses suivant leur nature. En particulier, le canal de diffusion ayant une largeur de bande de 27 MHz offert par les satellites de télédiffusion directe, qui sera vraisemblablement le premier support utilisé pour la diffusion par satellite des signaux HD-MAC, présente des imperfections notables provenant de distorsions linéaires et non linéaires, qui subsistent même lorsque le canal est complété par un filtre de Nyquist, généralement réparti entre émetteur et récepteur. La figure 1 montre, à titre d'exemple, la réponse impulsionnelle de la voie de transmission d'un canal de diffusion ayant les caractéristiques définies dans les actes finaux de la conférence CAMR de 1977 pour un échantillon isolé du signal HD-MAC, pour deux amplitudes A différentes de ce signal (A = 0,2 et A = 1). On voit que la réponse impulsionnelle du canal affecte essentiellement trois échantillons successifs $y_{n-1}$, $y_n$ et $y_{n+1}$ ; que les dégradations aux instants d'échantillonnage augmentent avec l'amplitude de l'impulsion (elles sont négligeables pour les faibles valeurs $A \leqq 0,1$) ; et qu'une erreur sur l'instant d'échantillonnage peut dégrader de façon importante la qualité des images. Or une telle erreur peut intervenir à la suite d'une dérive statique et/ou d'une gigue de phase de l'horloge de synchronisation du signal.

En cas de transmission sur réseau câblé en modulation d'amplitude, le filtrage de Nyquist peut être réalisé autour de la fréquence porteuse, dépassant 10 MHz, au lieu d'être effectué en bande de base, à la fréquence d'échantillonnage. Dans ce cas, le filtre de réception agit en tant qu'égaliseur de distorsion du canal de transmission. Le filtre en bande de base à l'entrée du récepteur doit pouvoir s'adapter automatiquement aux caractéristiques du canal afin de vérifier le premier critère de Nyquist.

L'invention vise à écarter dans une large mesure les conséquences des distorsions introduites par les canaux de transmission disponibles. Pour cela, elle utilise une égalisation adaptative pour minimiser le brouillage entre échantillons, souvent désigné par l'abréviation ISI (Intersymbol interference). Et elle propose de compléter cette égalisation par une commande automatique de la phase d'horloge, visant à ramener l'erreur sur l'instant d'échantillonnage à un niveau n'entraînant pas de dégradation inacceptable de la qualité des images.

Mais la mise en oeuvre de cette solution semble a priori exclue par la nature du signal d'image HD-MAC, constitué d'une suite d'échantillons susceptibles de prendre toutes les valeurs comprises entre -0,5 et +0,5 Volt, d'où il n'est pas possible d'extraire, à la réception, des informations traduisant une caractéristique du signal de transmission. Les signaux numériques duobinaires de son et de données, qu'ils soient à un débit de 10,125 Mbits/s ou de 20,25 Mbits/s, ne sont pas utilisables car ils ne contiennent pas d'information caractérisant l'effet de brouillage introduit par le canal sur des échantillons de niveau très variable à 20,25 MHz.

On connaît également (EP-A-0 212 839) un procédé conforme au préambule de la revendication 1, dans lequel le signal de référence est une séquence codée ou aléatoire. Le signal utile de programme est un signal analogique de type classique. Les difficultés liées à la transmission simultanée de signaux numériques et d'échantillons analogiques constituant un multiplex contenant l'information de programme ne sont évidemment pas appréciés dans ce document.

Pour cela, il est prévu un procédé de diffusion de programme de télévision à haute définition, conforme à la revendication 1.

Le signal de référence peut avoir des caractéristiques adaptées à un fonctionnement optimal de l'égaliseur place dans chaque récepteur et/ou pour permettre l'analyse des non-linéarités : par exemple les symboles d'une séquence peuvent avoir une amplitude différente de celle des symboles de la séquence suivante, la variation s'effectuant de façon pseudo-aléatoire ou suivant une périodicité prédéterminée.

Les symboles de la séquence binaire de référence sont insérés dans le signal HD-MAC de façon à être en phase avec l'horloge qui cadence le multiplex et sont utilisés pour commander automatiquement la phase d'horloge de décodage à la réception.

L'invention propose également un récepteur permettant de mettre en oeuvre le procédé ci-dessus, comprenant, en plus des voies de décodage duobinaire (sons, données DATV), une voie vidéo comprenant un filtre transverse adaptatif alimenté par les échantillons du signal HD-MAC, muni de moyens d'adaptation de ses coefficients par comparaison entre les séquences réelles à la sortie du filtre et la séquence pseudo-aléatoire mémorisée.

Il sera quelquefois suffisant d'utiliser un égaliseur linéaire pour réduire le brouillage entre échantillons successifs à un niveau suffisamment bas pour que la restitution s'effectue de façon correcte. Mais beaucoup de canaux, et notamment les voies de diffusion de satellite utilisant la modulation de fréquence, ont une réponse fortement non-linéaire, avec une réponse du genre montré en figure 1, qui rend insuffisante l'égalisation linéaire.

En conséquence, l'invention propose également de mettre en oeuvre une égalisation de correction des distorsions linéaires et non-linéaires et pour cela d'insérer dans le signal, en plus de la séquence pseudo-aléatoire utilisée comme premier signal de référence pour le calcul des coefficients de la partie linéaire de l'égaliseur dans le récepteur (séquence constituée de signaux d'amplitude faible pour que l'influence des distorsions non-linéaires puisse être négligée) un second signal de référence, destiné à l'égaliseur non-linéaire. L'égaliseur linéaire placé en amont ne laisse subsister que les distorsions non linéaires et permet le fonctionnement du second.

L'invention sera mieux comprise à la lecture de la description qui suit de modes particuliers de réalisation, donnés à titre d'exemples non limitatifs. La description se réfère aux dessins qui l'accompagnent, dans lesquels :

- la figure 1, déjà mentionnée, montre la réponse impulsionnelle d'une voie de transmission représentative d'un canal de diffusion par satellite, pour deux amplitudes de signal A = 0,2 Volt et A = 1 Volt ;
- la figure 2 est un synoptique de principe montrant une constitution possible des moyens de mise en oeuvre de l'invention dans un émetteur et un récepteur de télévision HD-MAC, permettant une égalisation linéaire ;
- la figure 3, similaire à une partie de la figure 2, est un synoptique simplifié de la partie d'un récepteur concerné par l'invention, dans le cas d'une égalisation en deux étapes, d'abord linéaire, puis non-linéaire;
- la figure 4 est un diagramme montrant un exemple de signal de référence destiné à être inséré dans le signal de télévision pour permettre l'adaptation de compensation des distorsions non-linéaires ;
- la figure 5 est un schéma de principe donnant une constitution possible d'un filtre d'égalisation non-linéaire utilisable dans le récepteur de la figure 3 ;
- la figure 6 donne un exemple de réalisation du filtre de la figure 5 ;
- la figure 7 enfin, montre la variation de dégradation absolue des échantillons reçus en fonction de l'amplitude A, avec et sans dispositif de correction.

Avant de décrire l'invention proprement dite, il peut être utile de rappeler la structure du multiplex en bande de base prévu pour la transmission d'un signal de télévision à haute définition compatible avec les normes D et D2-MAC/PAQUETS. Le nombre de lignes par image dans le signal haute définition est de 1250 mais, après sous-échantillonnage, le nombre de lignes effectivement transmises est de 625 par image. Le signal analogique d'image occupe les lignes 23 à 310 et 335 à 622, avec un ordre d'entrelacement de 2. Les signaux numériques de son et données occupent les périodes de suppression de ligne sur l'ensemble des lignes 1 à 624, ainsi que la totalité de la ligne 625, affectée à des informations de service. Les intervalles correspondant à l'encombrement de la partie du multiplex affectée à l'image dans la période de suppression de trame sont également disponibles pour la transmission d'informations numériques.

Certaines des lignes de la suppression trame (par exemple les lignes 1 à 22 et 311 à 328) sont utilisées pour transmettre des données complémentaires associées à l'image représentant le mouvement, les contours, etc., dites DATV.

On trouve ainsi successivement, sur une ligne courante :
- une salve de données codées en duobinaire, à un débit de 10,125 Mbits/s (D2-MAC) ou 20,25 Mbits/s (D-MAC) et précédées d'un mot de synchronisation de ligne,
- une période de clampage et de transition, et
- une période d'émission des signaux de chrominance et de luminance dans la partie image.

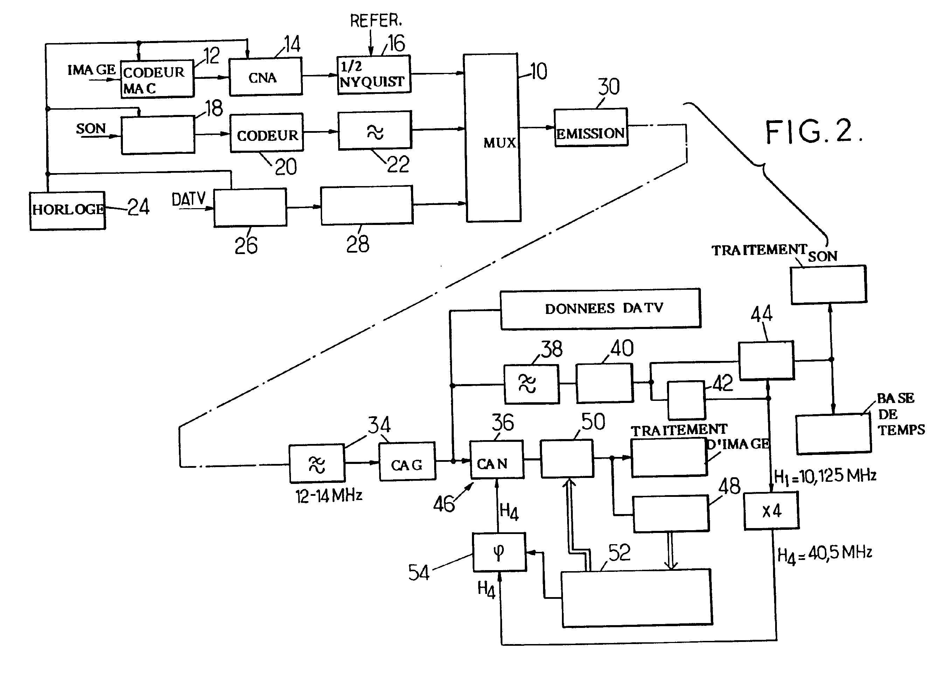

On décrira maintenant, en faisant référence à la figure 2, la constitution de principe de la partie de l'émetteur et du récepteur d'un système de diffusion concernés par l'invention.

Dans l'émetteur, cette partie est celle qui génère le signal de modulation. Elle comporte un multiplexeur temporel 10 fournissant un signal qui est ensuite appliqué à un modulateur 30, éventuellement après filtrage et correction de maintien.

Le multiplexeur 10 comporte trois voies d'entrée, respectivement affectées au signal d'image, au signal numérique de son et données et au signal numérique DATV de référence.

Le signal d'image MAC à haute définition est constitué d'une séquence d'échantillons indépendants, de durée T égale à 49,4 ns, correspondant à une fréquence 1/T = 20,25 Mhz.

Les échantillons sortant du codeur 12 sont appliqués à un convertisseur numérique/analogique 14. Les échantillons analogiques sont envoyés à un filtre 16 qui coopéré avec le filtre prévu dans le récepteur pour réduire à un niveau acceptable l'interférence inter-symboles (ISI) entre les échantillons transmis. Sur la figure 2 il s'agit d'un filtre 16 de type demi-Nyquist, un autre filtre demi-Nyquist étant prévu à la réception.

La fonction de transfert théorique d'un tel filtre a pour expression :

$$H(f) = 1 \qquad \text{pour } |f| < (1-\alpha)/2T$$

$$H(f) = \sqrt{\frac{1}{2} + \frac{1}{2} \sin \frac{[\pi/2 - \pi f T]}{\alpha}}$$

$$\text{pour } (1-\alpha)/2T < |f| < (1+\alpha)/2T$$

$$H(f) = 0 \text{ pour } |f| > (1+\alpha)/2T.$$

Le coefficient $\alpha$, dit "coefficient de retombée" et fréquemment désigné par l'appellation anglo-saxonne "roll-off", est choisi en fonction de la largeur de bande. En pratique, on peut choisir $\alpha = 0,2$ pour limiter la largeur de bande à 12,15 MHz.

La voie son et données représentée a une constitution de principe classique : elle comporte un circuit de compression 18 qui reçoit les informations numériques binaires de son et de données et les restitue sous forme de salves ayant un débit instantané égal à 10,125 Mbits/s ou 20,25 Mbits/s, en utilisant une horloge 24 commune à l'ensemble du dispositif. Le signal binaire de sortie du circuit de compression 18 est appliqué à un codeur duobinaire 20, suivi d'un filtre de mise en forme 22.

La voie d'insertion des signaux DATV a la même structure que celle utilisée pour le son et les données : elle comporte un circuit de compression 26 qui restitue les données DATV sous forme de salves à 20,25 Mbits/s qui subissent un codage duobinaire dans le codeur 28. Ces salves sont insérées dans certaines lignes de chaque suppression trame.

Les séquences de référence sont émises pendant une ou plusieurs lignes de suppression trame par la même voie de traitement que les signaux d'image HD-MAC. Dans la pratique, pour une amplitude maximale A = 1 Volt (Figure 1), l'amplitude des symboles de la séquence binaire pseudo-aléatoire utilisée pour l'égalisation linéaire ne doit pas dépasser 200 à 300 millivolts de crête à crête pour que l'influence des distorsions non-linéaires puisse être négligée.

Il est possible de prévoir, en plus des séquences de faible amplitude destinées à l'adaptation de l'égaliseur linéaire, des séquences de plus forte amplitude destinées au contraire à l'analyse des non-linéarités.

Le multiplex regroupant la voie d'image HD-MAC, les voies son et DATV et le signal de référence est envoyé à une chaîne d'émission classique comprenant le modulateur 30. Cette chaîne peut notamment avoir un modulateur de fréquence répondant à la spécification UER pour les signaux MAC.

Le récepteur 32 du système comporte des étages d'entrée 34 qui peuvent être de constitution classique. Les parties spécifiques au traitement de la voie son et de la voie vidéo peuvent également être du type prévu dans des récepteurs démunis de dispositif d'égalisation. Sur la figure 2, la voie son et données comporte, au moins dans le cas d'un codage D2 à 10,125 Mbits/s, un filtre passe-bas 38 limitant la bande passante à 5 MHz environ. Elle comporte ensuite un décodeur duobinaire 40 dont la sortie attaque d'une part un circuit de récupération d'horloge 42, d'autre part un échantillonneur 44 fonctionnant à la cadence de l'horloge récupérée à 10,125 MHz. Le signal démodulé est appliqué à un démodulateur son/données classique.

Le récepteur comporte aussi une voie de traitement des données DATV.

La voie image 46 comporte :
- un convertisseur analogique/numérique 36 fonctionnant à 40,5 MHz avec une horloge qui est synchrone de celle à 10,125 MHz, obtenue à partir des salves duobinaires de 10,125 Mbit/s ;
- un filtre égaliseur adaptatif 50 fonctionnant à 40,5 MHz destiné à compenser les distorsions linéaires, remplaçant le filtre demi-Nyquist à coefficients fixes normalement prévu dans le récepteur,
- un circuit 48 qui réalise l'acquisition des séquences duobinaires pseudo-aléatoires et la comparaison

4

avec le séquence mise en mémoire dans le récepteur. La position de chaque échantillon est parfaitement définie par le numéro de la ligne et le numéro de l'échantillon dans la ligne ;

- des moyens 52 de calcul des coefficients du filtre en fonction des séquences binaires, constitués par un micro-calculateur contenant un logiciel de calcul des coefficients ;

- un circuit 54 d'adaptation de la phase d'horloge à 40,5 MHz.

L'égaliseur 50 est généralement constitué par un filtre transverse qui doit avoir au moins seize coefficients dont les valeurs nominales sont celles de la meilleure approximation du filtre demi-Nyquist correspondant au filtrage idéal de la séquence binaire pseudo-aléatoire en l'absence de distorsion apportée par la voie de transmission. Il serait possible de répartir le filtre Nyquist entre l'émission et la réception de façon différente de celle décrite ci-dessus, par exemple en plaçant ce filtre totalement à la réception, mais en général les résultats obtenus sont moins favorables, au moins dans l'application à la diffusion par satellite.

Le filtre égaliseur 50 a par exemple la constitution décrite dans le document FR-A-2 556 530 et peut mettre en oeuvre un quelconque des algorithmes classiques d'adaptation. Toutefois, il semble que les algorithmes d'égalisation les plus intéressants susceptibles d'être utilisés sont ceux, correspondant au critère de l'erreur quadratique moyenne minimale, définis par les relations :

$$\vec{H}_{k+1} = \vec{H}_{k-\mu} \cdot \vec{X}_k \cdot e_k \qquad\qquad (1)$$

$$\vec{H}_{k+1} = \vec{H}_{k-\mu} \cdot \text{signe } (\vec{X}_k) \cdot \text{signe } (e_k) \qquad\qquad (2)$$

avec

$\vec{H}$ = vecteur des coefficients du filtre,

$\mu$ = pas constant et prédéterminé de convergence de l'algorithme

$\vec{X}$ = vecteur des échantillons d'entrée

$e$ = différence entre la sortie du filtre et le signal de référence (ou une valeur estimée de la sortie).

Le critère objectif du minimum de brouillage entre échantillons, pour l'ensemble des valeurs comprises entre 0 et 1V, constitue un guide d'optimisation du dispositif. Mais le choix final de l'algorithme sera fait en fonction des résultats observés, au niveau subjectif, sur la qualité des images.

On voit que les algorithmes à mettre en oeuvre sont simples. Etant donné que la rapidité de convergence n'est pas le critère essentiel à respecter, on peut encore les simplifier en admettant de n'effecteur l'adaptation, à chaque itération que sur un seul coefficient i à la fois. L'algorithme (2) devient alors (2 bis) :

$$\vec{Hi}_{k+1} = \vec{Hi}_{k-\mu} \text{ signe } (\vec{Xi}_k) \text{ signe } (e_k) \qquad\qquad (2 \text{ bis})$$

Le filtre égaliseur linéaire 50 est complété par le circuit d'adaptation de phase 54, dont la nécessité apparaît si on garde en mémoire qu'une erreur sur l'instant d'échantillonnage dépassent ±3ns dégrade la qualité des images de façon significative du fait que la largeur de bande disponible en transmission limite le coefficient de retombée du filtre de Nyquist à 20 %. Une telle précision ne peut pas en pratique être réalisée sans l'auto-adaptativité de la phase d'échantillonnage. L'auto-adaptativité est en partie obtenue par le filtre d'égalisation 50 et pour le reste par une commande directe de la phase.

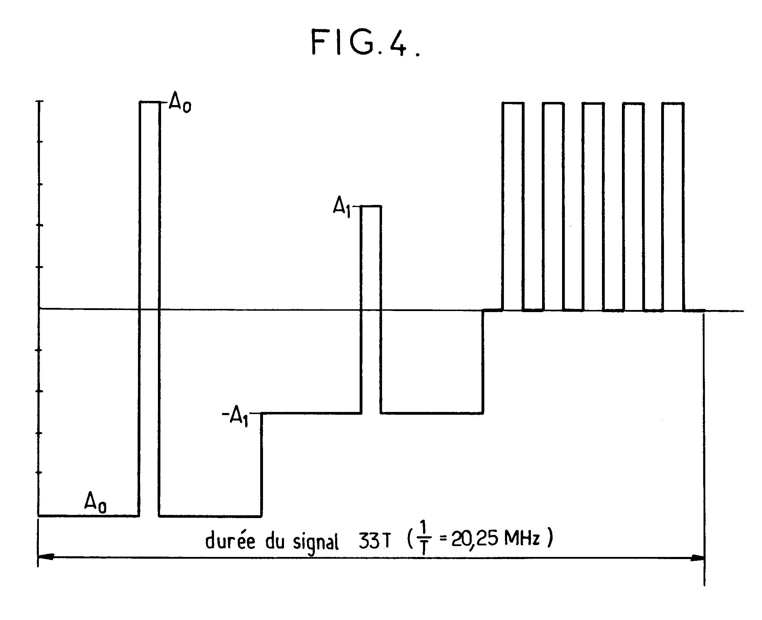

La figure 3, où les organes correspondant à ceux de la figure 2 portent le même numéro de référence, montre uniquement les composants d'un récepteur concernés par l'invention. Les signaux échantillonnés à 40,5 MHz en sortie de l'égaliseur linéaire 50 sont appliqués à un circuit de décimation qui ne retient qu'un échantillon sur deux. Le choix est effectué par un circuit de commande dans lequel la structure de sous-échantillonnage (par exemple quinconce trame) est mise en mémoire. On retrouve après décimation une suite d'échantillons à 20,25 MHz dont la position temporelle est identique à celle des échantillons fournis par l'émetteur. Cette suite d'échantillons, corrigée des distorsions linéaires, est appliquée à l'égaliseur non-linéaire 56 qui fournit les échantillons corrigés au décodeur HD-MAC. L'égaliseur 56 est transparent lorsque le canal de transmission n'apporte pas de distorsion autre que linéaire.

Les séquences binaires pseudo-aléatoires les plus avantageuses pour le calcul des coefficients du filtre constituant l'égaliseur linéaire ne sont pas les mieux appropriés pour l'égalisation non-linéaire. La second séquence de référence peut être constituée, à titre d'exemple, par une suite d'impulsions ayant des valeurs inégales suivie par un signal carré de fréquence égale à 10,125 MHz. Deux impulsions successives doivent être séparées par un intervalle de temps supérieur au nombre d'échantillons significativement affectés par l'interférence intersymbole due au canal de transmission.

La Figure 4 donne un exemple de signal de référence applicable à l'égalisation non-linéaire. Il est constitué de deux impulsions d'amplitudes crête à crête respectives égales à 1 Volt et 0,5 Volt suivies d'un signal carré de fréquence égale à 10,125 MHz et d'amplitude crête à crête égale à 0,5 Volt. Ce second signal de référence est inséré dans une ligne de suppression trame. Il est répété plusieurs fois dans cette ligne pour permettre l'élimination du bruit de fond. Les deux séquences utilisées pour l'égalisation linéaire et non-linéaire peuvent être émises dans la même ligne de suppression trame ou dans des lignes différentes. Les séquences d'échantillons reçues sont isolées par le circuit d'extraction 48 puis traitées par le micro-calculateur 52, l'un ou l'autre déterminant des valeurs moyennes. Puis la séquence des valeurs moyennes est comparée à une séquence de référence mémorisée dans le récepteur, dans une mémoire morte 58. A partir des échantillons d'erreur obtenus par soustraction, il est possible de déduire un modèle mathématique représentant la distorsion non linéaire et d'en déduire un algorithme de correction. Divers algorithmes sont utilisables : un seul exemple sera donné dans ce qui suit.

Pour faire choix d'un algorithme d'adaptation approprié de l'égaliseur 56, il convient tout d'abord de rechercher une représentation mathématique correcte de la distorsion non linéaire susceptible d'affecter le signal HD-MAC.

Pour une transmission d'une suite d'échantillons {ak} d'amplitude variant entre -0,5 et +0,5 Volt, l'amplitude de l'échantillon reçu $y_k$ de rang k est donnée par le modèle suivant :

$$y_k = a_k - \sum_{i=N}^{N} f_i(a_{k+i}) - \sum_{i=1}^{M} \left\{ h_{-i}(a_{k+1-i} - a_{k-i}) \quad (3) \right.$$
$$\left. + h_i(a_{k+i-1} - a_{k+i}) \right\}$$

où les fonctions fi sont de la forme:

$$f_i(x) = \sum_{j=1}^{P_1} \alpha_{ij} x^{2j-1}$$

et les fonctions hi de la forme :

$$h_i(x-y) = \sum_{j=1}^{P_2} \beta_{ij}(x-y)^{2j+1}$$

où $\alpha$ et $\beta$ sont des coefficients constants et $P_1$ et $P_2$ désignent des entiers, respectivement compris entre 1 et 5, et 1 et 3.

Le modèle mathématique qui vient d'être défini a été appliqué à la transmission en modulation de fréquence d'échantillons indépendants HD-MAC à 20,25 MHz dans un canal de satellite avec les paramètres de modulation suivants, appliqués à une porteuse fournie par un tube à ondes progressives dont la caractéristique AM/FM a une pente de 4°/dB :
- filtrage de Nyquist avec un facteur de retombée de 0,2,
- modulateur de fréquence avec $\Delta_{BF}$ = 9,54 MHz et préaccentuation MAC,
- filtre haute fréquence Butterworth à quatre pôles, de 27 MHz de largeur de bande à -3 dB avec limiteur-

6

discriminateur.

La réponse impulsionnelle d'un tel canal, montrée en Figure 1, s'étale sur cinq échantillons. Dans ce cas, le modèle peut être limité à N = 3 et M = 1 dans la formule (3) ci-dessus. Les sept fonctions fi et les deux fonctions $h_i$ peuvent être mises sous les formes polynomiales suivantes lorsque le second signal de référence a la forme représentée en Figure 4 :

$$f_{-3}(x) = f_3(x) = -3.765206 \ 10^{-3} x \ 2.076520 \ 10^{-2} x^3$$

$$f_{-2}(x) = f_2(x) = 7.7072672 \ 10^{-3} x \ 5.185820 \ 10^{-2} x^3$$

$$f_{-1}(x) = f_1(x) = -8.060041 \ 10^{-3} x - 4.539225 \ 10^{-2} x^3$$

$$f_0(x) = 1.049407 \ 10^{-2} + 2.420593 \ 10^{-2} x^3$$

$$h_{-1}(a_k - a_{k-1}) = 2.566 \ 10^{-2} (a_k - a_{k+1})^3$$

$$h_1(a_k - a_{k+1}) = 2.566 \ 10^{-2} (a_k - a_{k+1})^3$$

L'algorithme de correction appliqué aux échantillons reçus $\{y_k\}$ peut être déduit directement du modèle précédent. Il consiste en l'opération :

$$z_k = y_k + \sum_{i=-N}^{N} g_i(y_{k+i}) + \sum_{l=1}^{P} \left\{ l_{-i}(a_{k+1-i} - a_{k-i}) + l_i(a_{k+i-1} - a_{k+i}) \right\} \quad (5)$$

où $z_k$ est l'échantillon corrigé de rang k,

$\{y_k\}$ est la suite des échantillons reçus.

Dans l'application à la diffusion par satellite, on peut se limiter à N= 2 et P = 1.

Dans ce cas, les fonctions $g_i$ et $l_i$ ont l'expression polynomiale suivante :

$$g_i(y_{k+i}) = q_i y_{k+i} + r_i y^3_{k+i} (i = -2 \ \text{à} + 2)$$

$$l_{-1} = c (y_k - y_{k-1})^3$$

$$l_1 = c (y_k - y_{k+1})^3.$$

Le calcul des fonctions $g_i$ et $l_i$ revient à résoudre un système d'équations linéaires de onze équations à onze inconnues. A titre d'exemple, la procédure de calcul est donnée dans le cas où la séquence d'acquisition est constituée par la suite de trente-trois échantillons $\{a_i\}$ définis sur la Figure 4. Soit $\{y_i\}$, la suite des échantillons reçus correspondant à l'émission de la suite $\{a_i\}$.

La correction serait parfaite si l'algorithme de correction permettait d'assurer la relation $z_i = a_i$ quel que soit i. En pratique, cette condition est imposée pour onze valeurs de $a_i$ qui permettent de calculer les coefficients $q_i$, $r_i$ et c des fonctions $g_i$ et $l_i$

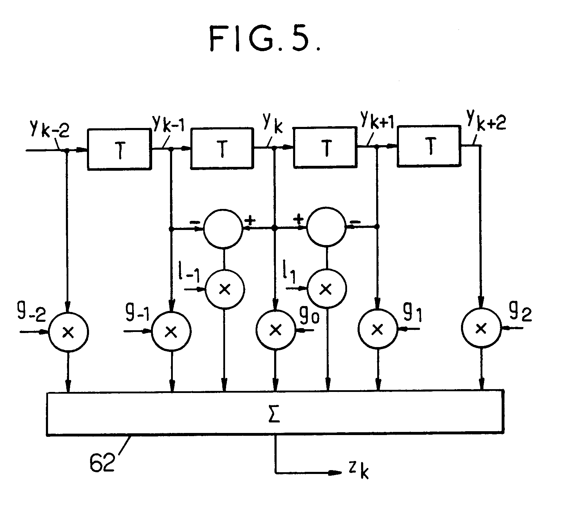

Un tel filtre peut avoir la constitution de principe montrée en Figure 5, correspondant à un filtre transverse à coefficients variables en fonction de l'amplitude du signal transmis. Les échantillons ayant subi le filtrage linéaire sont appliqués à l'entrée d'une chaîne d'éléments de retard et les échantillons $y_{k-N}$, ..., $y_{k-1}$, $y_k$, $y_{k+1}$, ..., obtenus sont multipliés par les coefficients $g_{-N}$, ..., $l_{-1}$, ... $g_1$, ... $l_1$, ..., $g_N$ dans des multiplieurs 60 et sommés dans un additionneur 62. Les coefficients g sont eux même ajustés à partir du second signal de référence.

Si aucune distorsion non linéaire n'affecte le signal de référence, les coefficients $g_i$ et $l_i$ sont nuls, ce qui entraîne $z_k = y_k$ : le filtre 56 est alors transparent.

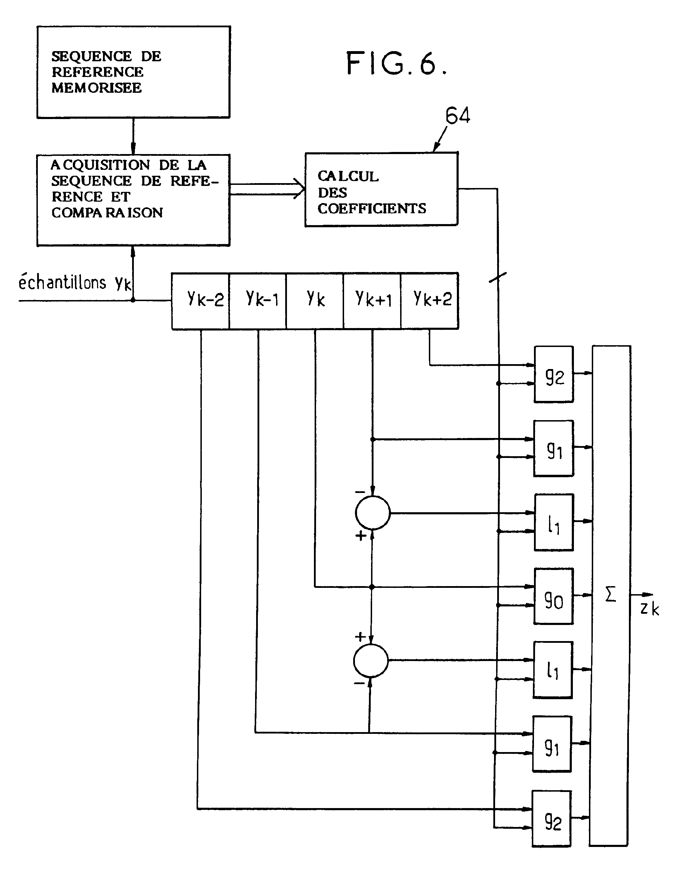

La Figure 6 donne un exemple de réalisation applicable au cas de la diffusion par satellite, où le filtre est symétrique et à cinq coefficients $g_2$, $g_1$, $l_1$, $g_0$, $l_1$, $g_1$, $g_2$, définis par les relations :

$$g_0(y) = + 3.738 \ 10^{-3} y + 8.996 \ 10^{-2} y^3$$

$$g_1(y) = g_{-1}(y) = -7.338 \ 10^{-3} y - 1.492 \ 10^{-1} y^3 \quad (6)$$

$$g_2(y) = g_{-2}(y) = + 3.697 \ 10^{-3} y + 7.612 \ 10^{-2} y^3$$

$$l_{-1}(y_k - y_{k-1}) = 3.548 \ 10^{-2} (y_k - y_{k-1})^3$$

$$l_1(y_k - y_{k+1}) = 3.548 \ 10^{-2} (y_k - y_{k+1})^2$$

Le circuit 49 réalise l'acquisition de la séquence de référence et la comparaison échantillon par échantillon avec la séquence mise en mémoire dans le circuit 58 et calcule les valeurs moyennes de chaque échantillon d'erreur défini par $z_k - y_k$.

Le bloc 64 de calcul des coefficients est dans la réalité intégré dans le micro-calculateur du récepteur, dont la mémoire contient des tables représentant les fonctions (6). Pratiquement, il suffit de cinq pages de mémoire vive adressables par des mots de 8 bits représentant l'amplitude quantifiée de l'échantillon $y_k$. Cette mémoire

7

vive réalise les fonctions g(y) et fait correspondre chaque amplitude de l'échantillon $y_k$ au niveau $g(y_k)$ ; le sommateur fournit l'échantillon $z_k$ codé sur 8 bits.

Les valeurs des éléments des tables de correspondance sont déterminées par le calculateur à partir du second signal de référence et raffraîchies périodiquement.

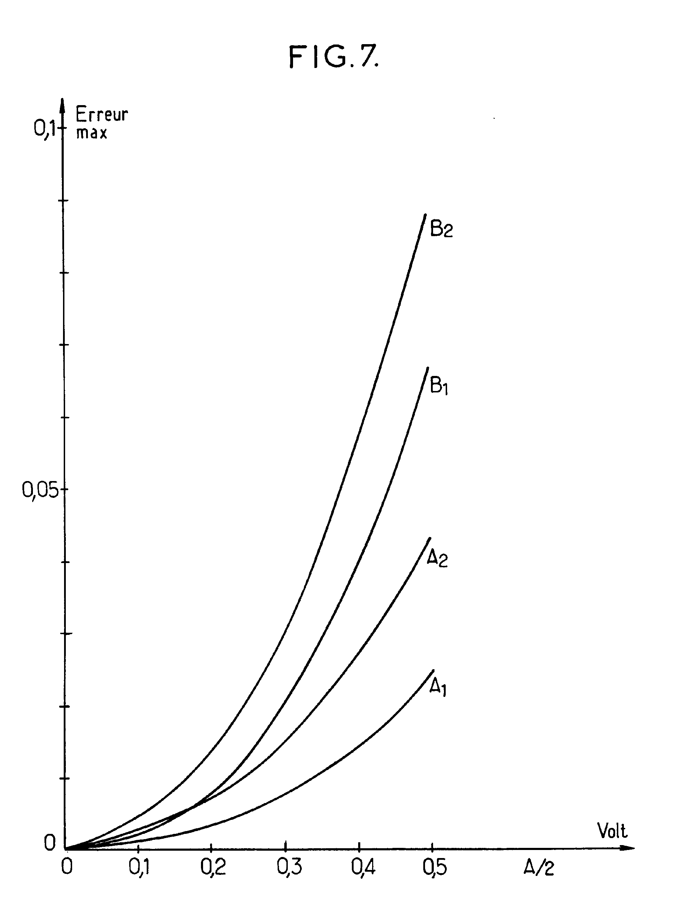

L'efficacité du montage de la Figure 4 apparaît sur les courbes de la Figure 7, qui donnent la dégradation absolue des échantillons reçus en fonction de l'amplitude A avec dispositif de correction (courbes A1 et A2) et sans dispositif de correction (courbes B1 et Bé) dans le cas d'un canal de diffusion par satellite tel que défini ci-dessus.

Deux types de signaux modulants ont été utilisés :

- une impulsion isolée d'amplitude A, A $\in$ [0,1], correspondant aux courbes A1 et B1 ;
- une séquence binaire pseudo-aléatoire à 20,25 Mbit/s d'amplitude 0 ou A avec A $\in$ [0,1], correspondant aux courbes A2 et B2.

L'algorithme de correction reprend les fonctions polynomiales $g_i$ définies par les relations (6).

## Revendications

1.  Procédé de diffusion de programme de télévision, sous forme de signaux analogiques auxquels est ajouté un premier signal de référence comportant une séquence transmise au minimum une fois par image, avec application aux signaux d'image, à la réception, d'une égalisation adaptative utilisant le signal de référence,

    caractérisé en ce que le programme est constitué par un multiplex temporel de signaux d'image formés d'échantillons analogiques et de signaux numériques de son et de données et en ce que le premier signal de référence est constitué par une séquence pseudo-aléatoire mémorisée dans le récepteur, de sorte que l'égalisation adaptative peut utiliser le signal de référence tel qu'il est reçu et la séquence mémorisée.

2.  Procédé selon la revendication 1, caractérisé en ce que les symboles constituant ladite séquence ont une amplitude suffisamment faible pour ne pas présenter de distorsion non-linéaire.

3.  Procédé selon la revendication 1 ou 2, caractérisé en ce que ladite séquence est insérée dans une ligne de la suppression trame du signal de télévision.

4.  Procédé selon la revendication 3, caractérisé en ce que ladite séquence est utilisée à la réception pour commander automatiquement la phase d'une horloge d'échantillonnage.

5.  Procédé selon l'une quelconque des revendications précédentes, caractérisé en ce qu'on inclut également dans le multiplex, à l'émission, un second signal de référence comprenant une séquence émise plusieurs fois par image, constituée au moins d'impulsions ayant des valeurs inégales, deux impulsions successives étant séparées par un intervalle de temps supérieur au nombre d'échantillons significativement affectés par l'interférence intersymboles due au canal de transmission, et en ce qu'on soumet, à la réception, les signaux ayant subi ladite égalisation a une seconde égalisation adaptative utilisant le second signal de référence et la séquence du second signal, mémorisée dans le récepteur.

6.  Procédé selon la revendication 5, caractérisé en ce qu'on effectue une moyenne sur plusieurs séquences du second signal de référence avant détermination d'erreur par comparaison avec la séquence mémorisée.

7.  Récepteur de télévision HD-MAC pour mise en oeuvre du procédé selon la revendication 1, caractérisé en ce qu'il comprend, en plus des voies de décodage duobinaire (38,40,42,44) et de récupération d'horloge, une voie vidéo comportant un filtre transverse adaptatif alimenté par les échantillons du signal HD-MAC, muni de moyens d'adaptation de ses coefficients par comparaison entre la séquence de référence reçue à la sortie du filtre et la séquence de référence mémorisée.

8.  Récepteur selon la revendication 7, caractérisé en ce qu'il comporte un circuit d'adaptation de phase d'horloge.

9.  Récepteur selon la revendication 7 ou 8, caractérisé en ce qu'il comporte un second filtre transverse adaptatif (56) de correction des distorsions non linéaires, placé à la sortie du premier filtre (56) de correction

EP 0 328 461 B1

des distorsions non-linéaires.

10. Récepteur selon la revendication 9, caractérisé en ce que le second filtre transverse adaptatif de correction des distorsions non linéaires a des coefficients qui sont des fonctions polynomiales de la valeur des échantillons reçus et des fonctions de la différence entre deux échantillons consécutifs.

**Patentansprüche**

1. Verfahren zum senden eines Fernsehprogramms in Form von Analogsignalen, welchen ein erstes Referenzsignal zugefügt wird, das eine wenigstens einmal pro Bild übertragene Sequenz umfaßt, bei welchem bei Empfang eine das Referenzsignal benutzende adaptive Entzerrung auf die Bildsignale angewandt wird, **dadurch gekennzeichnet,** daß das Programm aus einem Zeitmultiplex besteht, der aus analogen Stichprobenwerten gebildete Bildsignale und digitale Ton- und Datensignale umfaßt, und daß das erste Referenzsignal aus einer Pseudozufallssequenz besteht, die im Empfänger derart gespeichert ist, daß die adaptive Entzerrung das Referenzsignal, so wie es empfangen worden ist, und die gespeicherte Sequenz benutzen kann.

2. Verfahren nach Anspruch 1, **dadurch gekennzeichnet,** daß die Symbole, welche die Sequenz bilden, eine Amplitude aufweisen, die so klein ist, daß sie keine nicht-lineare Verzerrung hervorruft.

3. Verfahren nach Anspruch 1 oder 2,
   **dadurch gekennzeichnet,** daß
   die Sequenz in eine Halbbildaustastzeile des Fernsehsignals eingefügt wird.

4. Verfahren nach Anspruch 3, **dadurch gekennzeichnet,** daß die Sequenz bei Empfang zur automatischen Steuerung der Phase eines Stichprobenzeitgebers benutzt wird.

5. Verfahren nach einem der vorhergehenden Ansprüche,
   **dadurch gekennzeichnet,** daß
   bei Emission in den Multiplex auch ein zweites Referenzsignal eingefügt wird, welches eine pro Bild mehrmals ausgestrahlte Sequenz umfaßt, die durch wenigstens unterschiedliche Werte aufweisende Impulse gebildet ist, wobei zwei aufeinanderfolgende Impulse durch ein Zeitintervall getrennt sind, welches größer ist als die Zahl der Stichprobenwerte, die signifikant von der durch den Übertragungskanal hervorgerufenen Intersymbolstörung betroffen sind, und daß bei Empfang die Signale, die der Entzerrung unterzogen wurden, einer zweiten adaptiven Entzerrung unterzogen werden, welche das zweite Referenzsignal und die im Empfänger gespeicherte Sequenz des zweiten Signals benutzt.

6. Verfahren nach Anspruch 5, **dadurch gekennzeichnet,** daß vor Fehlerbestimmung durch Vergleich mit der gespeicherten Sequenz eine Mittelwertbildung mehrerer Sequenzen des zweiten Referenzsignals durchgeführt wird.

7. Empfänger für HD-MAC Fernsehen zur Durchführung des Verfahrens nach Anspruch 1, **dadurch gekennzeichnet,** daß er zusätzlich zu duobinären Dekodierwegen (38, 40, 42, 44) und zu Zeitgeberwiedergewinnungswegen einen Videoweg umfaßt, welcher ein von den Stichprobewerten des HD-MAC Signals gespeistes adaptives Transversalfilter aufweist, welches mit Mitteln zur Adaption seiner Koeffizienten durch Vergleich zwischen der am Ausgang des Filters empfangenen Referenzsequenz und der gespeicherten Referenzsequenz ausgestattet ist.

8. Empfänger nach Anspruch 7, **dadurch gekennzeichnet,** daß er eine Adaptionsschaltung für die Zeitgeberphase umfaßt.

9. Empfänger nach Anspruch 7 oder 8,
   **dadurch gekennzeichnet,** daß
   er ein zweites adaptives Transversalfilter (56) für die Korrektur von nicht-linearen Verzerrungen umfaßt, welches am Ausgang des ersten Filters (56) für die Korrektur von nicht-linearen Verzerrungen angeordnet ist.

9

10. Empfänger nach Anspruch 9, **dadurch gekennzeichnet,** daß das zweite adaptive Transversalfilter zur die Korrektur von nicht-linearen Verzerrungen Koeffizienten aufweist, welche Polynomfunktionen der empfangenen Stichprobenwerte und Funktionen der Differenz zwischen zwei aufeinanderfolgenden Stichprobenwerten sind.

**Claims**

1. Method of broadcasting television programs as analogue signals to which there is added a first reference signal comprising a sequence which is transmitted at least once per frame, with application of an adaptive equalization using the reference signal to the image signals as received,
   characterized in that the program consists of a time multiplex of image signals consisting of analogue samples and of digital sound and data signals and in that the first reference signal consists of a pseudo-random sequence which is stored in the receiver, whereby the adaptive equalization may use the reference signal as received and the stored sequence.

2. Method according to claim 1, characterized in that the symbols which constitute said sequence have an amplitude which is low enough for not exhibiting a nonlinear distortion.

3. Method according to claim 1 or 2, characterized in that said sequence is inserted in a line of the field blanking of the television signal.

4. Method according to claim 3, characterized in that said sequence is used when received for automatically controlling the phase of a sampling clock.

5. Method according to any one of the preceding claims, characterized by the further steps of including into the multiplex, upon transmission, a second reference signal which comprises a sequence which is transmitted a plurality of times per frame, including at least pulses having unequal values, two successive pulses being separated by a time interval which is higher than the number of samples which are significantly affected by intersymbol interference due to the transmission channel and subjecting the signals as received, which have been subjected to said equalization, to a second adaptive equalization using the second reference signal and the sequence of the second signal, stored in the receiver.

6. Method according to claim 5, characterized by the further step of averaging the second reference signal over a plurality of sequences thereof before determining the error by comparison with the stored sequence.

7. HD-MAC television receiver for carrying out the method according to claim 1, characterized in that it comprises, in addition to channels for duobinary decoding (38, 40, 42, 44) and clock recovery, a video channel which comprises an adaptive transverse filter which is fed with the samples of the HD-MAC signal, provided with means for adapting the coefficients thereof by comparing the reference sequence received at the output of the filter and the stored reference sequence.

8. Receiver according to claim 7, characterized in that it comprises a circuit for adapting the phase of the clock.

9. Receiver according to claim 7 or 8, characterized in that it comprises a second adaptive transverse filter (56) for correcting non-linear distorsions, located at the output of the first filter (56) for correcting non-linear distorsions.

10. Receiver according to claim 9, characterized in that the second adaptive transverse filter for correcting the non-linear distorsions has coefficients which are polynomial functions of the values of the received samples and are functions of the difference between two successive samples.

# FIG.1.

$\varepsilon_0 = 2mV$

$18\,mV$

$A = 0,2$
$A = 1$

$0$

$\varepsilon_1 = 5mV$

$\varepsilon_2 = 2,2\,mV$

$y_{n-2}$ $y_{n-1}$ $y_n$ $y_{n+1}$ $y_{n+2}$

échantillons

tension

A

# FIG.3.

36 — CAN

FILTRE NUMERIQUE 40,5 MHz — 50

$H_4$

DECIMATION

$H_4$ $H_2 = 20,25MHz$

FILTRE NON LINEAIRE 20,25 MHz — 56

TRAITEMENT DU SIGNAL D'IMAGE

$H_2$ — CHOIX DES ECHANT.

54 — φ

48 — ACQUIS DU SIGNAL

49 — ACQUIS. DU SIGNAL DE REFERENCE

58

$H_4 = 40,5MHz$

μC — 52

11

# FIG. 2.

FIG. 4.

$A_0$

$A_1$

$-A_1$

$A_0$

durée du signal  33 T  $(\frac{1}{T} = 20{,}25$ MHz $)$

# FIG.5.

FIG.6.

# FIG.7.